# EUROPEAN PATENT SPECIFICATION

(11) **EP 1 058 969 B1**
(45) Date of publication and mention of the grant of the patent: **07.08.2002**
(21) Application number: 99908904.8
(22) Date of filing: 16.02.1999
(51) Int. Cl.: H04B 1/18, H03F 1/34

(54) **RECEIVER INPUT CIRCUIT**
EMPFÄNGEREINGANGSSCHALTUNG
CIRCUIT D'ENTREE D'UN RECEPTEUR

(30) Priority: 26.02.1998 EP 98200605
(43) Date of publication of application: 13.12.2000
(73) Proprietor: Siemens Aktiengesellschaft, 80333 München (DE)
(72) Inventor: SESSINK, Franciscus, Josephus, Alfonsus, Maria, NL-5672 HH Nuenen (NL)
(86) International application number: EP9900985
(87) International publication number: WO9944300

(56) References cited:
- EP-A- 0 772 304
- US-A- 4 414 690
- US-A- 4 975 658

## Description

The invention relates to an input circuit as described in the preamble of claim 1.

The invention further relates to a tuner and to a radio receiver comprising such an input circuit.

Input circuits are known and are for example used in (mobile) radio receivers, television receivers etc. Input circuits, for example AM input circuits, must have a great sensibility to radio frequencies of 150 kHz and higher, the long wave signals. Further such an input circuit has to block frequencies below 150 kHz. To achieve this, high pass filter means are necessary.

One of the known solutions is to realise a filter consisting of capacitors and resistors coupled to the input of the input circuit. A disadvantage of this solution is that the resistors supply thermal noise to the received signal.

A second known solution is the use of a filter comprising an inductance. This solution is preferred because of less supplied noise. The value of the inductance has to be such that the cut off frequency is below the lowest signal frequency that has to be received, for example 150 kHz for an AM input circuit. As a consequence of the capacitive character of the source (the antenna) and the high input impedance of the input an unwanted resonance from the inductance results with a resonance frequency just below 150 kHz. This resonance can result in an instability and further leads to an unpredictable great sensitivity around this resonance frequency.

Another reason to use an inductance is that when an active antenna is used requiring power supply via the signal cable a high impedance is necessary for the circuit element that forms the connection between the power supply and the signal cable. For this circuit element also an inductance is used. This inductance has further, when used with a passive antenna, a filtering function with the problems as mentioned above.

Further disadvantages of the known input circuits are poor signal handling for 50 Hz or 60 Hz signals from power lines, poor signal handling for time transmitting signals (such as DCF77 at 77.5 kHz and RUGBY at 60 kHz), navigation systems (having frequencies in the region of 100 kHz), in the region of 20 kHz from submarine communication base stations, and instability when components are added for supply of an active antenna.

U.S. Patent No. 4,975,658 discloses a high frequency, negative feedback amplifier coupled at its input to an inductive network. The inductive network and the input capacitance of the amplifier form a resonance circuit. The resonance circuit assures a real input to the amplifier and reduces the input noise.

An object of the invention is to provide an input circuit that has not the drawbacks of the known circuits and further having an excellent noise-limited sensitivity. To this end a first aspect of the invention provides an input circuit as claimed in claim 1. A second aspect of the invention provides a tuner as claimed in claim 5. A third aspect of the invention provides a radio receiver as claimed in claim 6.

By optimising the noise matching and the power matching of the (AM) receiver independently of each other, it is possible to cancel the above mentioned resonance and to maintain the great sensitivity, meanwhile having a large attenuation for the disturbing low frequencies by choosing the cut off frequency optimally.

This uncoupling is achieved by lowering the input impedance by the inductive feedback loop and at the same time not changing the noise matching, resulting in an attenuation of the unwanted resonance without a loss of sensitivity of the received signals.

An input circuit according to the invention can be used as an AM input circuit but also as an FM input circuit. Especially by an AM input circuit the linearity is improved and a very good attenuation of low frequency signals is obtained.

As a consequence of the inductive character of the feedback loop the feedback signal decreases with higher frequencies.

An embodiment according to the invention comprises the features of claim 2.

By using a transformer as inductive feedback means coupled with a primary winding between the input of the amplifier and the RF ground terminal and with a secondary winding coupled with an output of the amplifier, the frequency response can be optimised without affecting the noise-limited sensitivity. The so-called RF ground terminal is a decoupled point, which is free of RF signals but not necessarily "real" ground (zero).

An embodiment according to the invention comprises the features of claim 3.

By dividing the primary winding into a first and a second part and coupling the filter means to the connection point the operation of the input circuit is further improved.

The invention and additional features which may optionally be used to implement the invention to advantage will be apparent from and elucidated with reference to the examples described hereinafter and shown in the figures. Herein shows:
Figure 1 a block schematic example of a radio receiver,
Figure 2 block schematic an example of an input circuit according to the invention, and
Figure 3 an example of an input circuit according to the invention in more detail.

Same elements are indicated with corresponding reference signs throughout the different figures.

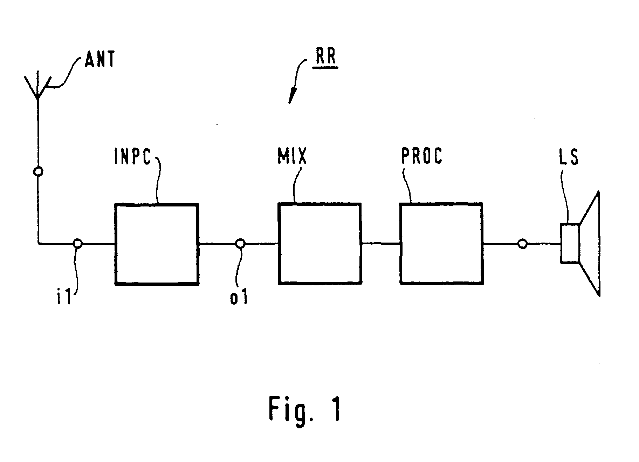

Figure 1 shows a block schematic example of a radio receiver RR comprising an input circuit INPC having an input i1 for receiving an input signal from, for example, an antenna ANT, and an output for supplying an output signal to a mixer MIX. The operation of the mixer is well known in the art, which mixer is coupled to a processing unit PROC. The processing unit normally has the following functions : channel filtering, demodulation and audio processing, as is common practice to the man in the art.

The processing unit PROC is finally coupled to a loudspeaker LS (or more loudspeakers) for reproducing the received signal.

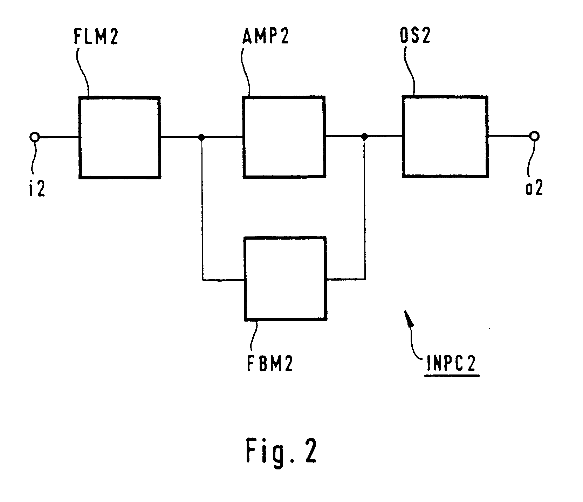

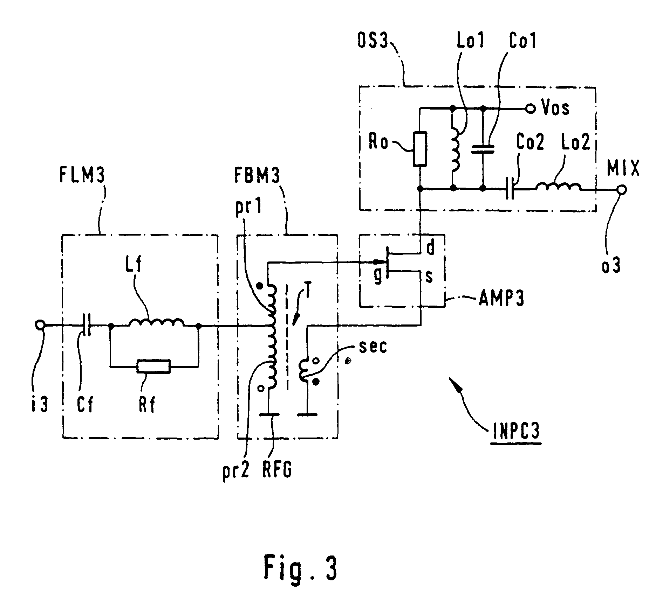

Figure 2 shows a block schematic example of an input circuit INPC2 having an input i2 for receiving an input signal from an antenna (see figure 1). The input i2 is coupled to filter means FLM2 for partial filtering the input signal. The filter means are coupled to an amplifier AMP2 for amplifying the partially filtered signal. An output of the amplifier is coupled to an output stage OS2 for supplying the filtered and amplified signal at an output o2 to the mixer (see figure 1). The output stage OS2 also performs a partial filtering operation (see figure 3).

The filter means FLM2 take care of a roughly filtering to attenuate the signals outside the wanted signal range.

The output stage OS2 takes care of a further partial filtering of the signal.

An (other) output of the amplifier AMP2 is further coupled to feedback means FBM2 for feeding back a signal to the input of the amplifier.

Figure 3 shows in more detail an example of an input circuit INPC3 according to the invention comprising an input i3, filter means FLM3, feed back means FBM3, an amplifier AMP3 and an output stage OS3 with an output o3.

The operation of the input circuit is as follows. At the input i3 the input circuit receives an input signal from an antenna (see figure 1). This input signal is first partially filtered in filter means FLM3, which filter means comprise a series arrangement of a capacitor Cf and a parallel arrangement of an inductance Lf and a resistor Rf. The elements of the filter means are chosen such that the cut off frequency is well below the lowest frequency to be received. The capacitor Cf attenuates the lower frequencies such as the 50 or 60 Hz signals, the 16 kHz signals etc. The filter means comprise an inductance Lf to attenuate the so called VHF signals such as television and FM signals etc.

The filter means FLM3 are coupled to feed back means FBM3 formed in this example by a transformer T, having a first and a second primary winding pr1 and pr2, and a secondary winding sec. The filter means FLM3 are coupled to the connection point of the first and second primary winding. The other end of the second primary winding pr2 is coupled to a so called RF ground terminal RFG, whereas the other end of the first primary winding pr1 is coupled to the amplifier AMP3.

The amplifier AMP3 is in this example implemented as a Field Effect Transistor FET. The gate g is coupled to the first primary winding pr1, whereas the drain d is coupled to the output stage OS3. The source s of the FET is coupled to the secondary winding sec of the transformer T, for feeding back part of the amplified signal. The winding directions are indicated in the figure. The first and second primary windings pr1 and pr2 operate as a so called auto-transformer. The second primary winding pr2 is coupled to the RF ground terminal RFG. This RF ground terminal is a decoupled point which is free of RF signals but not necessary "real" ground (zero).

From experiments it appeared that a winding ratio of 1 : 1.33 for the transformer part formed by the first and second primary windings pr1 and pr2 respectively performed well in combination with the FET. In that case the secondary winding sec can be chosen to a ratio of 60 : 1 to the primary (so pr1 : pr2 : sec = 1 : 1.33 : 0.015.).

However it will be clear to the man in the art that the winding ratios are not essential to the invention concerned.

The output stage OS3 comprises an parallel arrangement of a resistor Ro, an inductance Lo1 and a capacitor Co1 between the drain of the FET and a supply voltage Vos. The connection point between the parallel arrangement and the drain d is coupled via a series arrangement of a second capacitor Co2 and a second inductance Lo2 to the output o3. Herewith also a partially filtering is achieved in the output stage. As described above (see description of figure 2) the partial filtering in the output stage concerns the further partial filtering of the signal(s).

As mentioned above the input circuit can be used as an AM input circuit but also as a FM input circuit. When used as an AM input circuit the input circuit must have a great sensibility for signals above 150 kHz.

In the above description the idea of the invention has been described on the basis of an detail example. The man skilled in the art will be well aware of a lot of different solutions that fall within the scope of the invention concerned

For example is it possible to use one primary winding, so not a divided winding with a tap (pr1 and pr2), whereby the filter means FLM are coupled (directly) to the input of the amplifier. Also the amplifier is not necessarily limited to one single active element.

The invention provides an input circuit and a tuner and a receiver having such an input circuit which is able to attenuate the unwanted signals received at the input of the input circuit, and which further provides a flat frequency response. This is achieved by using inductive feedback means.

## Claims

1. Input circuit for a radio receiver comprising an input for receiving an input signal from an antenna (ANT), filter means (FLM) coupled between the input (i) and an amplifier (AMP) which amplifier (AMP) is coupled to an output stage, which output stage (OS) is arranged for supplying an output signal, via an output, to a mixer circuit (MIX) wherein the input circuit comprises inductive feedback means (FBM) coupled between the amplifier (AMP) and the filter means (FLM) wherein the filter means (FLM) comprise a capacitor (Cf) in series with a parallel arrangement of a resistor (Rf) and an inductor (Lf) such that the cut off frequency is well below the lowest frequency to be received.

2. Input circuit as claimed in claim 1, **characterized in that** the inductive feedback means (FBM) comprise a transformer (T) having a secondary winding (SEC) coupled to an output (S) of the amplifier (AMP) and a primary winding (pr) coupled between an input of the amplifier (AMP) and an RF ground terminal (RFG).

3. Input circuit as claimed in claim 2, **characterized in that** the primary winding (pr) of the transformer (T) has a first and a second part (pr1, pr2), whereby the connection point of the first and the second part (pr1, pr2) is coupled to the filter mean (FLM) and the other end of the first part (pr1) is coupled to the amplifier (AMP).

4. Tuner comprising an input circuit as claimed in claim 1.

5. Radio receiver comprising an input circuit as claimed in claim 1.

## Patentansprüche

1. Eingangsschaltung für einen Rundfunkempfänger mit einem Eingang zum Empfangen eines Eingangssignals von einer Antenne (ANT), zwischen den Eingang (i) und einen Verstärker (AMP) geschalteten Filtermitteln (FLM), wobei der Verstärker (AMP) an eine Ausgangsstufe (OS) angekoppelt ist, die zum Zuführen eines Ausgangssignals über einen Ausgang zu einer Mischerschaltung (MIX) angeordnet ist, wobei die Eingangsschaltung zwischen den Verstärker (AMP) und das Filtermittel (FLM) geschaltete induktive Rückkopplungsmittel (FBM) umfaßt, wobei die Filtermittel (FLM) einen Kondensator (Cf) in Reihe mit einer parallelen Anordnung eines Widerstandes (Rf) und eines Induktors (Lf) umfassen, so daß die Grenzfrequenz weit unterhalb der niedrigsten zu empfangenen Frequenz liegt.

2. Eingangsschaltung nach Anspruch 1, **dadurch gekennzeichnet, daß** das induktive Rückkopplungsmittel (FBM) einen Transformator (T) mit einer an einen Ausgang (S) des Verstärkers (AMP) angekoppelten Sekundärwicklung (SEC) und einer zwischen einen Eingang des Verstärkers (AMP) und einen HF-Erdanschluß (RFG) geschalteten Primärwicklung (pr) umfaßt.

3. Eingangsschaltung nach Anspruch 2, **dadurch gekennzeichnet, daß** die Primärwicklung (pr) des Transformators (T) einen ersten und einen zweiten Teil (pr1, pr2) aufweist, wobei der Verbindungspunkt des ersten und des zweiten Teils (pr1, pr2) an die Filtermittel (FLM) angekoppelt und das andere Ende des ersten Teils (pr1) an den Verstärker (AMP) angekoppelt ist.

4. Tuner mit einer Eingangsschaltung nach Anspruch 1.

5. Rundfunkempfänger mit einer Eingangsschaltung nach Anspruch 1.

## Revendications

1. Circuit d'entrée d'un récepteur radio comprenant une entrée permettant de recevoir un signal d'entrée provenant d'une antenne (ANT), des moyens de filtre (FLM) couplés entre l'entrée (i) et un amplificateur (AMP), lequel amplificateur (AMP) est couplé à un étage de sortie, lequel étage de sortie (OS) est adapté afin de fournir un signal de sortie, par l'intermédiaire d'une sortie, à un circuit mélangeur (MIX), dans lequel le circuit d'entrée comprend des moyens de contre-réaction inductive (FBM) couplés entre l'amplificateur (AMP) et les moyens de filtre (FLM), dans lequel les moyens de filtre (FLM) comprennent un condensateur (Cf) monté en série avec un montage en parallèle d'une résistance (Rf) et d'une inductance (Lf) de telle sorte que la fréquence de coupure se situe bien au-dessous de la plus basse fréquence à recevoir.

2. Circuit d'entrée selon la revendication 1, **caractérisé en ce que** les moyens de contre-réaction inductive (FBM) comprennent un transformateur (T) ayant un enroulement secondaire (SEC) couplé à une sortie (S) de l'amplificateur (AMP) et un enroulement primaire (pr) couplé entre une entrée de l'amplificateur (AMP) et une borne de masse HF (RFG).

3. Circuit d'entrée selon la revendication 2, **caractérisé en ce que** l'enroulement primaire (pr) du transformateur (T) a une première et une seconde parties (pr1, pr2), de façon à ce que le point de connexion de la première et de la seconde parties (pr1, pr2) soit couplé aux moyens de filtre (FLM) et à ce que l'autre extrémité de la première partie (pr1) soit couplée à l'amplificateur (AMP).

4. Tête haute fréquence comprenant un circuit d'entrée selon la revendication 1.

5. Récepteur radio comprenant un circuit d'entrée selon la revendication 1.
